# EUROPEAN PATENT SPECIFICATION

(11) **EP 2 381 726 B1**
(45) Date of publication and mention of the grant of the patent: **30.10.2013**
(21) Application number: 10305429.2
(22) Date of filing: 23.04.2010
(51) Int. Cl.: H04W 56/00, H04W 74/08

(54) **A method for a random access procedure between a base station and user terminals, a base station and a user terminal therefor**
Verfahren für eine Direktzugriffsprozedur zwischen einer Basisstation und Benutzerendgeräten, Basisstation und Benutzerendgerät dafür
Procédé de transmission de procédure d'accès aléatoire entre une station de base et des terminaux utilisateur, station de base et terminal utilisateur correspondant

(43) Date of publication of application: 26.10.2011
(73) Proprietor: Alcatel Lucent, 75007 Paris (FR)
(72) Inventor: Cesar, Bozo, 70439, Stuttgart (DE); Doetsch, Uwe, 74392, Stuttgart (DE)
(74) Representative: Kleinbub, Oliver

(56) References cited:
- WO-A1-2007/117186
- WO-A1-2008/115247
- US-A1- 2002 037 732
- US-A1- 2005 053 099
- ALCATEL-LUCENT ET AL: "Analysis of impact of cell range extension", 3GPP DRAFT; R1-093762, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388283, [retrieved on 2009-10-17]

## Description

### Field of the invention

The invention relates to a method for a random access procedure between a base station and user terminals, and a base station and a user terminal adapted to perform said method.

### Background

A communication cell in a wireless communication system, in particular in a Third Generation Partnership Project Long Term Evolution (3GPP LTE) standard communication system, comprises a base station, which is also called enhanced NodeB (eNodeB) in LTE, and a number of terminal devices, also referred to as user terminals. These systems are operated in a variant of LTE in Time Division Duplex, TDD, such that the same data channel is used for uplink signals, i.e. signals transmitted from the user terminals to the base station in an uplink subframe, and for downlink signals, i.e. for signals transmitted from the base station to the user terminals in a downlink subframe. However, in another variant of LTE, frequency division duplex, FDD, is used for the communication between the base station and the user terminals, in which case different channels are used for the uplink and downlink signals.

In a TDD or FDD transmission scheme, uplink signals are required to arrive at the base station in a predefined time grid to avoid overlap with uplink signals from other user terminals. Moreover, the uplink signals should be received in the base station within a predefined power range to enable the base station to decode and process the uplink signal.

When a user terminal is switched on in a communication cell, the user terminal neither knows the propagation delay of the downlink signal from the base station to the user terminal, nor the propagation delay from the user terminal to the base station. Thus, when starting the transmission, the user terminal does not know how to delay its uplink data signal in order to ensure that the latter arrives at the base station in the desired time interval, e.g. time slot in LTE. Moreover, the user terminal does not know how big the attenuation of the signals e.g. due to path loss is, and consequently cannot estimate the transmit power it has to use so that the uplink signal arrives at the base station within the predefined power range.

For solving these problems, in the current LTE standard, a random access procedure is performed e.g. when a user terminal wants to establish a radio link or when a handover is performed in order to enable power and delay adjustment. For this purpose, uplink resources are reserved for transmission of a so-called random access preamble so that the user terminal can transmit the first signals used for uplink synchronization in the base station without disturbing data signals being transmitted from other user terminals to the base station. The preamble comprises in principle a cyclic prefix, a preamble sequence, and a gap used as a guard time to handle the timing uncertainty.

Before the random access procedure is started, the user terminal has already obtained downlink synchronization from the cell-search procedure. However, as the location of the user terminal in the cell is not known, the uplink synchronization has not yet been established prior to random access, and thus, there is timing uncertainty in the uplink timing. The timing uncertainty increases with increasing cell size. In order to take this timing uncertainty into account and to avoid interference with subsequent subframes not used for random access, the guard time has been added as part of the preamble structure.

Several so-called preamble formats with different length of the guard time for different maximum timing uncertainties, i.e. for different cell-sizes, are available in the current LTE standard. Some of these preamble formats also support a longer preamble sequence in order to increase the preamble energy at the detector, which is especially useful in larger cells.

The base station signals in a broadcast channel, dependent e.g. on the cell size, to the user terminals which preamble format the user terminals shall use for the random access procedure.

The user terminals can choose a preamble sequence out of a set of preferably orthogonal Zadoff-Chu sequences for the random access procedure.

Moreover, the user terminal starts transmitting the preamble with low transmit power and slowly increases the transmit power until the base station can decode the signal and respond with a control message which contains correction values for the transmit power and the transmit delay.

In the patent application WO 2007/117186 A1, a random access process is disclosed with a method in which the UE position is determined and the distance and propagation delay between the UE and NodeB is calculated before the transmission of the RA-request, and the timing of the transmission is advanced by the propagation delay.

In the patent application US 2005/0053099 A1, a method in a wireless communications device including obtaining timing advance e.g. based on a distance of the wireless device from a base transceiver station is disclosed. In some embodiments, the wireless device transmits a modified access or normal burst when using timing advance determined on the wireless communication device.

In the patent application WO 2008/115247 A1, a method involving a configurable random access channel structure is described, which discloses in an embodiment generating a random access channel burst that includes a cyclic prefix and a selected number of repetitions of a preamble, with the number of repetitions being selected based on at least one of a cell radius and a radio transmission frequency.

### Summary

In the current LTE release 8 standard which applies the above-described random access procedure, especially in large cell deployments radio resources are wasted and a high processing power in the base station is required for detecting unsynchronized signals during the random access process.

The object of the invention is thus to propose a method for a random access procedure between a base station and user terminals with reduced duration of the random access process, and with a reduced processing power to detect unsynchronized signals.

The basic idea of the invention is that user terminals use a broadcast signal, as e.g. a global positioning system (GPS) signal, to generate the same frame start trigger as it is used by the base station, i.e. eNodeB in case of LTE.

When a user terminal receives the downlink frame start, it can measure the transmission delay between the base station and the user terminal, which roughly is half of the round trip delay. With the knowledge of the round trip delay, the user terminal can calculate the timing advance for the uplink signal and can at least roughly calculate the required transmit power.

Furthermore, a broadcast signal is used by the base station to signal the allowed preamble formats to the user terminals.

Based on the knowledge of the transmission delay, the user terminal can e.g. choose the preamble format with the smallest guard time or smallest amount of needed radio resources of all available preamble formats, i.e. the round trip delay is corrected for transmission of the uplink in the user terminal so that the preamble format with the smallest guard time or smallest amount of needed radio resources of all available preamble formats can be chosen.

User terminals that do not use or can not use the broadcast signal for said synchronization use a predefined preamble format for the random access procedure e.g. signaled by the base station, which can be e.g. the preamble format with the biggest guard time.

The object is thus achieved by a method for a random access procedure between a base station and user terminals, wherein the base station signals to the user terminals at least two preamble formats with different guard times for the random access procedure, at least one user terminal uses a broadcast signal which is also received by the base station for synchronization of a transmission of uplink signals with a transmission of downlink signals, and at least one of the at least one user terminal that uses the broadcast signal for said synchronization selects a preamble format out of said at least two preamble formats for the random access procedure.

The object is furthermore achieved by a base station for a random access procedure between the base station and at least one user terminal, wherein the base station comprises at least one processing means which is adapted to signal to the at least one user terminal at least two preamble formats with different guard times for the random access procedure.

The object is furthermore achieved by a user terminal for a random access procedure between the base station and the user terminal, wherein the user terminal comprises at least one processing means which is adapted to receive at least two preamble formats with different guard times for the random access procedure, use a broadcast signal for synchronization of a transmission of uplink signals with a transmission of downlink signals, and select a preamble format out of said at least two preamble formats for the random access procedure.

Thus, according to a first aspect, the object is met by a method as described above, the method comprising: synchronizing the transmission of the uplink data signal with the transmission of a downlink subframe transmitted from the base station to the user terminal by using a broadcast signal, i.e. a common signal, in particular a common trigger signal of a global positioning system which is received by both the base station and the user terminal.

By receiving the same trigger signal in both the base station and the user terminal, it is possible to synchronize the uplink and downlink signals in the TDD or FDD duplex operation. Using a trigger signal of a global positioning system is particularly advantageous, as the signal can be received in both the base station and the mobile station concurrently, i.e. without a propagation delay, thus providing a common time standard to the base station and the user terminal.

In one variant, the method further comprises: determining a propagation delay between the broadcast signal and the start of the reception of the downlink signal, and calculating a delay correction value for advancing the transmission of the uplink signal based on the determined propagation delay.

The invention proposes to synchronize the initial uplink signals during network entry to a common synchronization signal by the following process: The user terminal receives the signal of the global positioning system, thus knowing the frame start trigger of the base station for starting the transmission of the downlink signal. Thus, when the user terminal receives the downlink frame, it can measure the propagation delay for the transmission between the base station and the user terminal, which roughly is half of the round trip delay, and can thus calculate the typically negative delay, i.e. timimg advance, of the uplink signal with respect to the start of the downlink subframe such that the uplink data signal arrives at the base station in a desired time interval.

In one development, for calculating the delay correction value a time offset between the broadcast signal, i.e. the common trigger signal, and the start of the transmission of the downlink subframe is taken into account. Typically, the base station starts the transmission of the downlink frame directly after reception of the trigger contained in the signal from the global positioning system. However, the base station may also transmit the downlink subframe with a predefined delay in respect to the trigger signal. The mobile station has to take this predefined time offset into account. The information about the time offset may be known to the user terminal beforehand, or it may be broadcast by the base station in the downlink subframe.

In a further variant, the method comprises: determining a time offset between the start of the downlink subframe and the start of an uplink subframe as assumed from the base station, and calculating the delay correction value based on the time offset and on the propagation delay such that the uplink data is received in the base station at the assumed start time of the uplink subframe. With the knowledge of the round trip delay and additional information on the position of the allocation for the uplink subframe relative to the frame start, the user terminal can determine when it has to start the transmission of the uplink signal so that the uplink data arrive at the base station in the appropriate time interval, i.e. at the assumed start time of the uplink subframe. The value of the time offset may be known to the user terminal as it is pre-defined for a given type of TDD frame, it may be extracted from the received downlink signal, or broadcast from the base station.

In another development, the method further comprises: in the user terminal, determining a distance to the base station, and estimating a transmit power for the data signal and/or calculating a delay correction value for delaying the transmission of the data signal in dependence of the determined distance. Although the distance may be estimated based on the propagation delay, it is typically more advantageous to determine the distance based on information about the position of the base station. These coordinates may be broadcast to the user terminal via downlink e.g. by including them in the downstream subframe. As the user terminal can derive its own coordinates from the signal of the global positioning system, the distance between the base station and the user terminal can be determined, and, based on the determined distance, an estimate of the required delay correction value and transmission power may be performed. In particular, it may be advantageous to calculate the delay correction value based on the shortest distance instead of the propagation delay, because the latter may be caused by a far reflector and can vary fast, especially if the user terminal is a mobile terminal. These fast delay variations can be handled by the so-called cyclic prefix and require no timing adjustment. In addition to the distance, the estimate of the transmission power may also be based on a model which takes the path loss of the radio signal into account, the model in particular also taking the topography, like e.g. buildings, mountains etc., between the respective positions of the base station and of the user terminal into account.

In another variant, the global positioning system is chosen from the group consisting of: NAVSTAR-GPS, Galileo, and Glonass (Globalnaja Nawigazionnaja Sputnikowaja Sistema). It will be understood that the method described above may be performed using global positioning systems according to different standards.

In another embodiment of the invention, user terminals signal to the base station information about their ability to use the broadcast signal for said synchronization. The user terminals can e.g. be classified into so-called categories, which amongst others depend on the ability of the user terminals to receive said broadcast signal for synchronization. The user terminals signal their categories to the base station, which in turn can decide based on the amount of user terminals that have the ability to use the broadcast signal for said synchronization whether or not it signals to the user terminals the at least two preamble formats with different maximum timing uncertainties for the random access procedure.

A further aspect of the invention is implemented in a communication cell of the type described in the introduction, the user terminal being adapted to receive the signal from the global positioning system for synchronizing the transmission of the uplink data signal with the downlink subframe. Although it is known for the base stations of an LTE system to use signals from a global positioning system to synchronize their operation e.g. in multi cellular networks using single frequency network application, i.e. to synchronize the frame start of all base stations, the use of a global positioning system for synchronizing the user terminals with the base station in the same communication cell is a novel concept. For the purpose of receiving the trigger signal, a GPS receiver has to be implemented in both the user terminals and the base station.

In one embodiment, the user terminal comprises a propagation delay determining unit for determining a propagation delay between the common trigger signal and the reception of the start of the downlink subframe at the user terminal, and a delay correction value calculation unit for calculating a delay correction value for the delay of the transmission of the uplink data signal based on the determined propagation delay. The delay correction value may in particular be a negative delay, i.e. the start of the transmission of the uplink data signal may be performed with a timing advance.

In another embodiment, the delay correction value determining unit is adapted to determine a time offset between the start of the downlink subframe and the start of an uplink subframe as assumed from the base station, and the delay correction value calculating unit is adapted to calculate the delay correction value based on the time offset and on the propagation delay such that the uplink data arrive at the base station in the appropriate time interval, i.e. at the assumed start time of the uplink subframe. As has been described above, the time offset may be determined in different ways, in particular by extracting the required delay information from the downlink subframe. When the uplink data is received in the appropriate time interval of the uplink subframe, no or only a low guard time between the preamble and the subsequent user data area has to be reserved. Consequently, the amount of radio resources for user data and thus the data throughput is increased.

In another embodiment, the user terminal comprises a transmit power estimating device for estimating an uplink transmit power of the uplink data depending on the distance between the base station and the user terminal. By at least roughly estimating the uplink transmit power, it is possible to avoid several iterations of the uplink transmit power adaptation, thus reducing the time duration of the random access procedure.

Another aspect of the invention is implemented in a wireless communication system, in particular a 3GPP LTE system, comprising at least one communication cell as described above. The wireless communication system may be equipped with a plurality of communication cells, the base stations of these cells being preferably synchronized by the common trigger signal from the global positioning system.

It will be understood that in practical applications, not all of the user terminals of a communication cell may be equipped with a GPS receiver, such that "legacy" user terminals without GPS receiver can choose a preamble format with a higher guard time which is higher than the maximum possible propagation delay.

A further aspect of the invention is related to a computer program product comprising code means adapted to perform all the steps of the method as described above. The computer program product may be implemented in the user terminal in the form of a suitable software or hardware, in particular a field programmable gate array (FPGA) or an application-specific integrated circuit (ASIC).

The invention is described in the following within the framework of 3GPP LTE, however as the invention is not restricted to 3GPP LTE, but can in principle be applied in other networks that apply a random access procedure with different preamble formats, in the following, instead of the term eNodeB used in LTE, the more general term base station is used.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows exemplarily the usage of time-frequency resources for four different preamble formats.
Fig. 4 schematically shows exemplarily the timing of downlink data and an uplink random access preamble at a base station and at a user terminal with lower round trip delay.
Fig. 5 schematically shows exemplarily the timing of downlink data and an uplink random access preamble at a base station and at a user terminal with higher round trip delay.
Fig. 6 schematically shows exemplarily the timing of downlink data and an uplink random access preamble at a base station and at a user terminal with higher round trip delay that have been synchronized according to an embodiment of the invention.

### Description of the embodiments

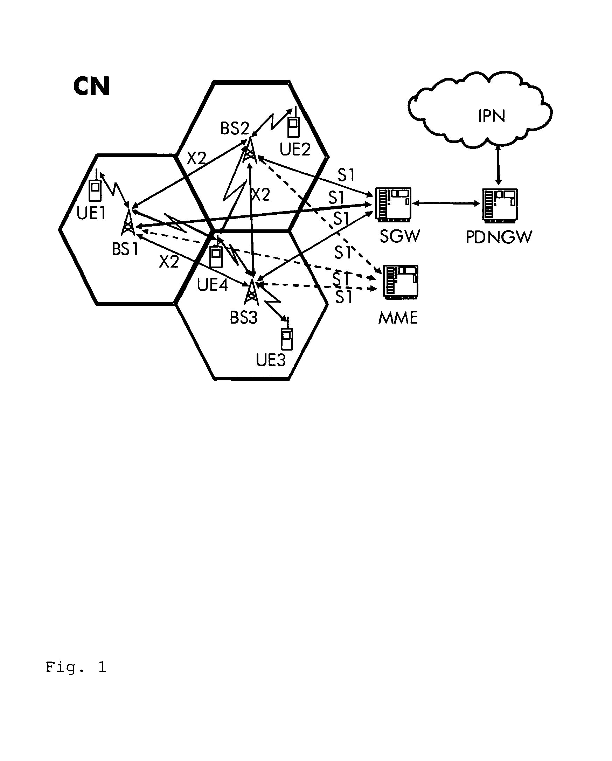

Fig. 1 shows as an example of a communication network in which the invention can be implemented a communication network CN according to the standard 3GPP LTE.

Said communication network CN comprises base stations BS1-BS3, user terminals UE1-UE4, a serving gateway SGW, a packet data network gateway PDNGW, and a mobility management entity MME.

Each of said user terminals UE1-UE4 is connected via radio connections to one or multiple of said base stations BS1-BS3, which is symbolized by flashes in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. a eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard primarily in order to transfer the user plane signal and the control plane signal during handover.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal (UE1-UE4) and the respective serving base station (BS1-BS3).

The mobility management entity MME performs tasks of the subscriber management and the session management, and also performs the mobility management during handover between different access networks.

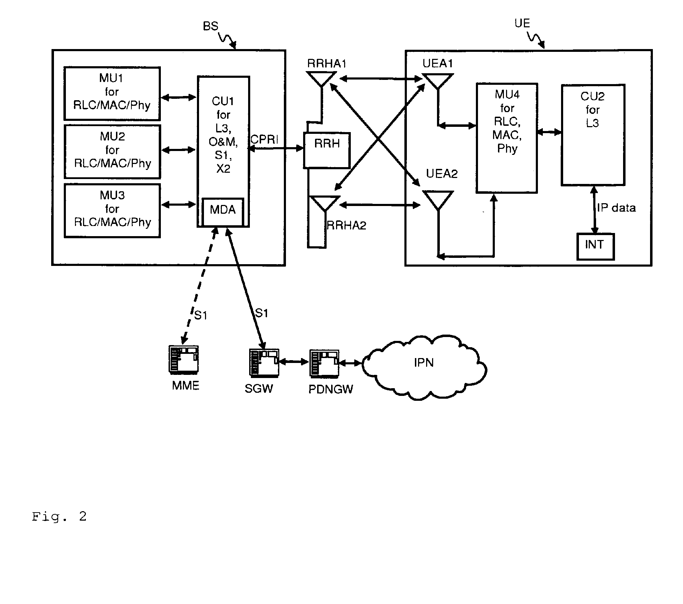

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and the control unit board CU1 is in turn connected to a remote radio head RRH via a so-called Common Public Radio Interface (CPRI).

The remote radio head RRH is connected by way of example to two remote radio head antennas RRHA1 and RRHA2 for transmission and reception of data via a radio interface.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described above.

The remote radio head RRH comprises the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 via the control unit board CU over the Common Public Radio Interface to the remote radio head and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH preferably via lossless fibre links that carry the CPRI data. This architecture reduces costs for service providers because only the remote radio heads RRH containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

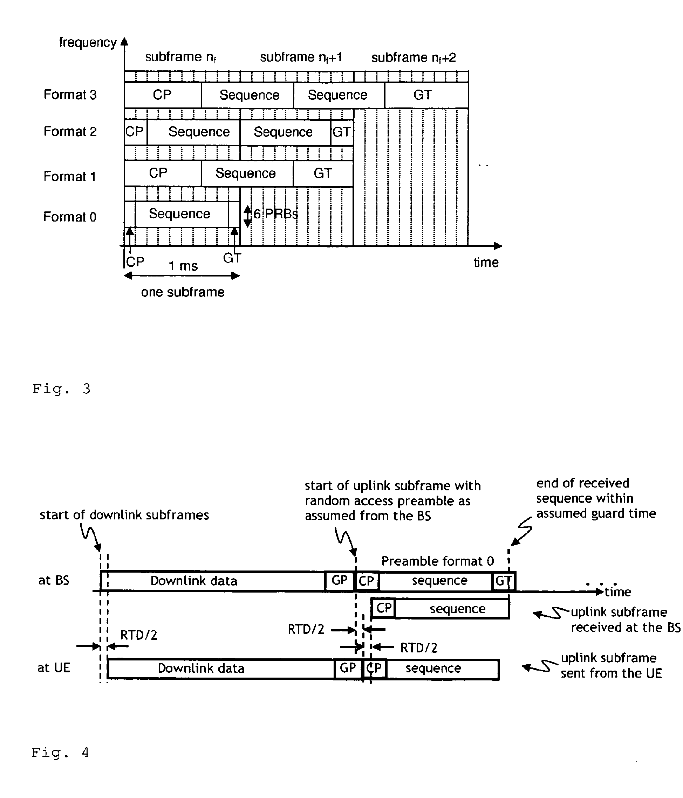

Fig. 3 schematically shows exemplarily the usage of time-frequency resources for four different preamble formats as used in LTE.

The most important purpose of the transmission of a preamble from a user terminal to a base station is to indicate to the base station the presence of a random access attempt.

In principle, the preamble formats allocate 6 physical resource blocks (PRB) and one, two or three subframes.

As already mentioned above, the preamble transmission uses a guard time GT to handle the timing uncertainty caused e.g. by a round trip delay.

The preamble format 0 in fig. 3 has a length of 1 subframe, and comprises a cyclic prefix CP and a gap, i.e. a guard time GT, of 0.1 ms each, and a preamble sequence length of approximately 0.8 ms. This allows for small cell sizes up to 15 km.

The preamble format 1 in fig. 3 has a length of 2 subframes, and comprises a cyclic prefix CP of 0.68 ms, a guard time GT of 0.52 ms, and a preamble sequence length of approximately 0.8 ms. This allows for large cell sizes up to 77 km.

The preamble format 2 in fig. 3 has a length of 2 subframes, and comprises a cyclic prefix CP and a guard time GT of 0.2 ms each, and a preamble sequence length of approximately 1.6 ms. This allows for medium cell sizes up to 29 km. The preamble format 2 supports a longer preamble sequence to increase the preamble energy at the detector.

The preamble format 3 in fig. 3 has a length of 3 subframes, and comprises a cyclic prefix CP of 0.68 ms, a guard time GT of 0.72 ms, and a preamble sequence length of approximately 1.6 ms. This allows for very large cell sizes up to 100 km. The preamble format 3 supports a longer preamble sequence to increase the preamble energy at the detector.

According to the prior art, the base station BS signals in the so-called system information block 2 (SIB2) on a broadcast channel (BCH) amongst others random access parameters, like e.g. the preamble format that must be used for random access.

According to an embodiment of the invention, the base station BS signals to the user terminals UE at least two preamble formats with different maximum timing uncertainties for the random access procedure e.g. due to different guard times GT.

A user terminal UE that uses a broadcast signal, as e.g. a GPS signal, for synchronization of a transmission of uplink signals with a transmission of downlink signals can select after synchronization a preamble format out of said at least two preamble formats.

The selection of the preamble format can e.g. be dependent on the length of the guard time GT for the random access procedure of the preamble format, and the user terminal UE can select after synchronization e.g. the preamble format 0 with the smallest guard time GT for the random access procedure, which also is the shortest preamble with a length of one subframe.

However, the selected preamble format can also be a tradeoff between the length of the preamble and the length of the preamble sequence. The user terminal UE can e.g. select after synchronization preamble format 2, which has a higher preamble sequence length of 1.6 ms, but on only a relatively small guard time GT of 0.2 ms. Thus, after synchronization, the user terminal UE can select out of the preamble formats 2 and 3, which both offer a long preamble sequence, the shorter preamble with the preamble format 2.

Fig. 4 schematically shows exemplarily the timing of downlink data and an uplink random access preamble at a base station and at a user terminal with lower round trip delay. In the example, the user terminal UE uses the preamble format 0 for the random access preamble.

In the upper part in fig.4, the timing of transmission and reception of downlink and uplink data respectively at the base station BS is depicted.

In the lower part in fig.4, the timing of the transmission and the reception of uplink and downlink data respectively at the user terminal UE is depicted.

The user terminal UE of Fig. 4 is located not too far from the base station BS, so that only a small propagation delay between the start of the transmission of downlink data in the base station BS and the reception thereof in the user terminal UE occurs. The propagation delay is being denoted in fig. 4 as half of the roundtrip delay RTD/2. The user terminal UE knows from control messages in the downlink data when the transmission of an uplink subframe with a random access preamble has to be started relative to the start of the downlink subframe received at the user terminal UE. Due to the propagation delay RTD/2, the transmission of uplink data starts with a delay of RTD/2. Thus, as the transmission of the uplink subframe comprising the random access preamble in the user terminal UE starts with a delay of RTD/2, and the propagation delay, which is assumed to be equal for uplink and downlink, amounts to RTD/2, the uplink subframe comprising the random access preamble is received in the base station BS with a delay compared to the assumed reception time which corresponds to the round trip delay RTD.

The base station assumes the reception of the uplink subframe comprising the random access preamble without any delay directly after the end of the downlink-uplink gap GP. As the round trip delay in the example is rather low, the end of the sequence part of the uplink subframe comprising the random access preamble received with a delay of RTD lies in a time interval in which the base stations assumes a guard time interval. Thus, as a reception of data in a guard time GT can be accepted, the transmission of the uplink subframe comprising the random access preamble using the preamble format 0 can be accepted.

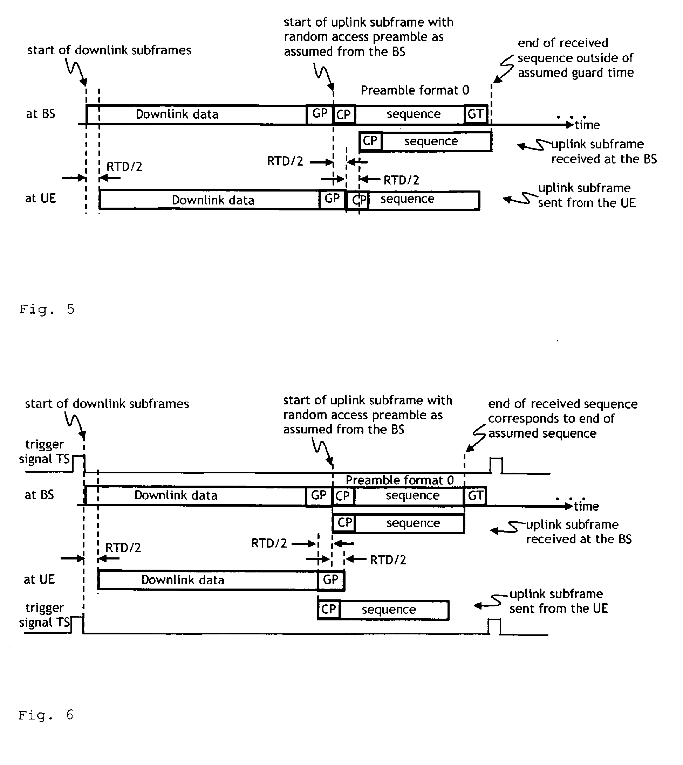

Fig. 5 schematically shows exemplarily the timing of downlink data and an uplink random access preamble at a base station and at a user terminal with higher round trip delay. In the example, the user terminal UE uses the preamble format 0 for the random access preamble.

In the upper part in fig.5, the timing of transmission and reception of downlink and uplink data respectively at the base station BS is depicted.

In the lower part in fig.5, the timing of the transmission and the reception of uplink and downlink data respectively at the user terminal UE is depicted.

The user terminal UE of Fig. 5 is located rather far from the base station BS, such that a higher propagation delay between the start of the transmission of downlink data in the base station BS and the reception thereof in the user terminal UE occurs. The propagation delay is being denoted in fig. 5 as half of the roundtrip delay RTD/2. The user terminal UE knows from control messages in the downlink data when the transmission of an uplink subframe with a random access preamble has to be started relative to the start of the downlink subframe received at the user terminal UE. Due to the propagation delay RTD/2, the transmission of uplink data starts with a timimg advance of RTD/2. Thus, as the transmission of the uplink subframe comprising the random access preamble in the user terminal UE starts with a delay of RTD/2, and the propagation delay, which is assumed to be equal for uplink and downlink, amounts to RTD/2, the uplink subframe comprising the random access preamble is received in the base station BS with a delay compared to the assumed reception time which corresponds to the round trip delay RTD.

The base station assumes the reception of the uplink subframe comprising the random access preamble without any delay directly after the end of the downlink-uplink gap GP. As the round trip delay in the example is rather high, the end of the sequence part of the uplink subframe comprising the random access preamble received with a delay of RTD lies after the guard time interval as assumed by the base station. Thus, as a reception of data after the guard time GT can not be accepted, as the data will not be correctly identified as a preamble sequence and the transmission of other data will be disturbed, the transmission of the uplink subframe comprising the random access preamble using the preamble format 0 can not be accepted in the example.

In order to identify and decode the preamble sequence correctly, a base station serving rather large cell sizes leading to rather large round trip delays, like e.g. the base station depicted in fig. 5, signals to user terminals UE that a preamble with a preamble format 1, 2 or 3 has to be used, as said preamble formats provide higher guard times.

However, preambles with a preamble format 1, 2 or 3 need more radio resources. Thus, in the following a method for a random access procedure is proposed which consumes less radio resources.

Fig. 6 schematically shows exemplarily the timing of downlink data and an uplink random access preamble at a base station and at a user terminal with higher round trip delay that have been synchronized according to an embodiment of the invention. In the example, the user terminal UE uses the preamble format 0 for the random access preamble.

In the upper part in fig.6, the timing of transmission and reception of downlink and uplink data respectively at the base station BS is depicted.

In the lower part in fig.6, the timing of the transmission and the reception of uplink and downlink data respectively at the user terminal UE is depicted.

Both the base station BS and the user terminal UE receive a trigger signal TS, e.g. derived from a GPS signal, for synchronization of a transmission of uplink signals with a transmission of downlink signals.

The user terminal UE of Fig. 6 is located rather far from the base station BS, such that a higher propagation delay between the start of the transmission of downlink data in the base station BS and the reception thereof in the user terminal UE occurs. The propagation delay is being denoted in fig. 5 as half of the roundtrip delay RTD/2. The distance between the base station BS and the user terminal UE, and thus the roundtrip delay RTD is the same as in the example depicted in fig. 5.

As both the user terminal UE and the base station BS use the triggering information derived e.g. from a GPS signal as a common trigger signal, the user terminal UE can measure its individual propagation delay RTD/2 between the trigger signal TS and the start of the reception of the downlink data by using a propagation delay determining unit. Based on the calculated propagation delay RTD/2, the delay correction value RTD for correcting the delay of the transmission of the uplink subframe can be calculated in a delay correction value calculating unit of the user terminal UE, the latter only multiplying the propagation delay RTD/2 by a factor of two and using the delay correction value RTD as a negative delay.

As has already been described above, a time offset between the start of the received downlink subframe and the start of the transmission of the uplink subframe is known to the user terminal, and hence the delay correction value calculating unit may subtract the delay correction value RTD from said time offset to determine the appropriate start of the transmission of the uplink subframe in the user terminal UE which allows the preamble sequence to be received in the base station BS at the start of the uplink subframe as assumed from the base station.

Thus, when performing the synchronization of the uplink and downlink transmission in the user terminal UE in the way described above, the provision of a guard time GT in the preamble is not needed, i.e. user terminals applying said synchronization can use a preamble format with no or only a small guard time GT. Thus, the user terminal UE applying synchronization can use a preamble with the short preamble format 0, whereas the user terminal UE in fig. 5 had to use a longer preamble format 1-3.

Moreover, when the propagation delay RTD/2 is known, a transmit power of the preamble may at least be roughly calculated or estimated in a transmit power estimating device of the user terminal UE. The transmit power estimating device may also take the distance between the base station BS and the respective user terminal into account for determining the path loss. For this purpose, the information about the GPS coordinates of the base station BS may be provided to the user terminal UE, for example in a control message from the base station BS. As the user terminals UE also have knowledge about their own coordinates owing to the GPS signal, their mutual distance may be calculated. Moreover, when using topographic data and possibly weather data between the position of the base station BS and the position of the respective user terminal UE, a model for the path loss of the radio signals can be generated which allows one to refine the estimation of the required transmit power, thus avoiding several iterations in the transmit power adaptation. It will be understood that it is also possible to calculate the delay correction value RTD based on the determined distance instead of the propagation delay. For this purpose, the correction value calculating unit of the user terminal UE may be adapted accordingly. In this case, the trigger information derived from the GPS signal is not required for performing the synchronization.

The base station BS can signal to the user terminals UE two or more allowed preamble formats. User terminals that apply synchronization by means of a broadcast signal, i.e. trigger signal, can select a shorter preamble format with a smaller guard time, whereas user terminals that do not apply synchronization must use a longer preamble with a longer guard time.

It will be appreciated that although in the above example in fig. 6, the transmission of the downlink subframe directly follows the reception of the trigger signal in the base station BS, when an offset is used between the common trigger signal TS and the start of the transmission of the downlink subframe, the delay correction value calculating unit may be adapted to take such an offset into account. Furthermore, it will be understood that although the concepts described herein have been exemplified for an LTE system, these concepts may equally well be applied to other types of communications systems. Moreover, the synchronization between uplink and downlink transmissions is not limited to the TDD scheme described above and may also be applied for a FDD transmission scheme to synchronize the uplink signals from different user terminals.

In the present LTE Release 8 standard, only one so-called physical random access channel (PRACH) configuration index can be signaled, i.e. only one preamble format can be used in a cell. To enable usage of the invention in a future LTE standard, preferably additional information elements are introduced to define additional PRACH allocations for LTE Release 10 user terminals supporting the GPS based random access procedure. Preferably, only LTE Release 10 user terminals shall be able to decode the new information elements so that only LTE Release 10 user terminals will use the additional PRACH allocations.

The above description of the preferred embodiments has been given by.way of example. From the disclosure given, those skilled in the art will not only understand the present invention and its attendant advantages, but will also find apparent various changes and modifications to the structures and methods disclosed. The applicant seeks, therefore, to cover all such changes and modifications as defined by the appended claims.

## Claims

1. A method for a random access procedure between a base station (BS) and user terminals (UE), wherein
• the base station (BS) signals to the user terminals (UE) at least two preamble formats with different guard times (GT) for the random access procedure,
• at least one user terminal (UE) uses a broadcast signal (TS) which is also received by the base station (BS) for synchronization of a transmission of uplink signals with a transmission of downlink signals,
• and at least one of the at least one user terminal (UE) that uses the broadcast signal (TS) for said synchronization selects a preamble format with the smallest length of the guard time (GT) or smallest amount of needed radio resources out of said at least two preamble formats for the random access procedure.

2. A method according to any of the preceding claims, wherein said broadcast signal (TS) is a global positioning system signal.

3. A method according to any of the preceding claims, wherein the at least one of the at least one user terminal (UE) determines a propagation delay between the broadcast signal (TS) and the start of the reception of the downlink signal, and calculates a delay correction value for advancing the transmission of the uplink signal based on the determined propagation delay.

4. A method according to claim 3, wherein the at least one of the at least one user terminal (UE) takes a time offset between the broadcast signal (TS) and the start of the transmission of the downlink signal into account for calculating the delay correction value.

5. A method according to any of the preceding claims, wherein user terminals (UE) that do not use the broadcast signal (TS) for said synchronization use one of said at least two preamble formats which has been selected by the base station (BS) for transmission without synchronization for the random access procedure.

6. A method according to any of the preceding claims, wherein user terminals (UE) signal to the base station (BS) information about their ability to use the broadcast signal (TS) for said synchronization.

7. A method according to any of the preceding claims, wherein the base station (BS) signals to the user terminals (UE) the at least two preamble formats with different guard times (GT) for the random access procedure only if the amount of user terminals (UE) that have the ability to use the broadcast signal (TS) for said synchronization is above a threshold.

8. A method according to any of the preceding claims, wherein the at least one of the at least one user terminal (UE) estimates a transmit power for the uplink signals in dependence of the propagation delay.

9. A method according to any of the preceding claims, wherein the at least one of the at least one user terminal (UE) determines a distance to the base station (BS) and estimates a transmit power for the uplink signals in dependence of the determined distance.

10. A base station (BS) for a random access procedure between the base station (BS) and at least one user terminal (UE), wherein the base station (BS) comprises at least one processing means which is adapted to signal to the at least one user terminal (UE) at least two preamble formats with different guard times (GT) for the random access procedure.

11. A user terminal (UE) for a random access procedure between the base station (BS) and the user terminal (UE), wherein the user terminal (UE) comprises at least one processing means which is adapted to
• receive at least two preamble formats with different guard times (GT) for the random access procedure,
• use a broadcast signal (TS) for synchronization of a transmission of uplink signals with a transmission of downlink signals,
• and select a preamble format out of said at least two preamble formats with the smallest length of the guard time (GT) or smallest amount of needed radio resources for the random access procedure.

12. A communication network (CN) comprising at least one base station (BS) according to claim 10 and at least one user terminal (UE) according to claim 11.

## Patentansprüche

1. Verfahren für eine Direktzugriffsprozedur zwischen einer Basisstation (BS) und Benutzerendgeräten (UE), wobei
• die Basisstation (BS) den Benutzerendgeräten (UE) mindestens zwei Präambelformate mit unterschiedlichen Schutzzeiten (GT) für die Direktzugriffsprozedur signalisiert,
• mindestens ein Benutzerendgerät (UE) ein Rundfunksignal (TS), welches ebenfalls an der Basisstation (BS) empfangen wird, für die Synchronisation einer Übertragung von Uplink-Signalen mit einer Übertragung von Downlink-Signalen verwendet,
• und mindestens eines der mindestens ein Benutzerendgeräte (UE), welches das Rundfunksignal (TS) für die besagte Synchronisation verwendet, ein Präambelformat mit der kürzesten Schutzzeitlänge (GT) oder der kleinsten Menge von erforderlichen Funkressourcen aus den besagten mindestens zwei Präambelformaten für die Direktzugriffsprozedur auswählt.

2. Verfahren nach Anspruch 1, wobei das besagte Rundfunksignal (TS) ein Signal eines globalen Systems zur Positionsbestimmung ist.

3. Verfahren nach einem beliebigen der vorstehenden Absprüche, wobei das besagte mindestens eine der mindestens ein Benutzerendgeräte (UE) eine Laufzeitverzögerung zwischen dem Rundfunksignal (TS) und dem Beginn des Empfangs des Downlink-Signals ermittelt und einen Verzögerungskorrekturwert für ein Vorverlegen der Übertragung des Uplink-Signals auf der Basis der ermittelten Laufzeitverzögerung berechnet.

4. Verfahren nach Anspruch 3, wobei das besagte mindestens eine der mindestens ein Benutzerendgeräte (UE) einen Zeitversatz zwischen dem Rundfunksignal (TS) und dem Beginn der Übertragung des Downlink-Signals für die Berechnung des Verzögerungskorrekturwertes berücksichtigt.

5. Verfahren nach einem beliebigen der vorstehenden Ansprüche, wobei Benutzerendgeräte (UE), welche nicht das Rundfunksignal (TS) für die besagte Synchronisation verwenden, eines der besagten mindestens zwei Präambelförmate, welches von der Basisstation (BS) für die Übertragung ausgewählt wurde, ohne Synchronisation für die Direktzugriffsprozedur verwenden.

6. Verfahren nach einem beliebigen der vorstehenden Ansprüche, wobei Benutzerendgeräte (UE) Informationen über ihre Fähigkeit, das Rundfunksignal (TS) für die besagte Synchronisation zu verwenden, an die Basisstation (BS) signalisieren.

7. Verfahren nach einem beliebigen der vorstehenden Ansprüche, wobei die Basisstation (BS) die mindestens zwei Präambelformate mit unterschiedlichen Schutzzeiten (GT) für die Direktzugriffsprozedur nur dann an die Benutzerendgeräte (UE) signalisiert, wenn die Menge der Benutzerendgeräte (UE), welche fähig sind, Rundfunksignale (TS) für die besagte Synchronisation zu verwenden, einen Grenzwert überschreitet.

8. Verfahren nach einem beliebigen der vorstehenden Ansprüche, wobei das mindestens eine der mindestens ein Benutzerendgeräte (UE) eine Sendeleistung für die Uplink-Signale in Abhängigkeit von der Laufzeitverzögerung schätzt.

9. Verfahren nach einem beliebigen der vorstehenden Ansprüche, wobei das mindestens eine der mindestens ein Benutzerendgeräte (UE) eine Distanz zu der Basisstation (BS) ermittelt und eine Sendeleistung für Uplink-Signale in Abhängigkeit von der ermittelten Distanz schätzt.

10. Basisstation (BS) für eine Direktzugriffsprozedur zwischen der Basisstation (BS) und mindestens einem Benutzerendgerät (UE), wobei die Basisstation (BS) mindestens ein Verarbeitungsmittel umfasst, welches dazu ausgelegt ist, mindestens zwei Präambelformate mit unterschiedlichen Schutzzeiten (GT) für die Direktzugriffsprozedur an das mindestens eine Benutzerendgerät (UE) zu signalisieren.

11. Benutzerendgerät (UE) für eine Direktzugriffsprozedur zwischen der Basisstation (BS) und dem Benutzerendgerät (UE), wobei das Benutzerendgerät (UE) mindestens ein Verarbeitungsmittel umfasst, welches für das Durchführen der folgenden Schritte ausgelegt ist:
• Empfangen von mindestens zwei Präambelformaten mit unterschiedlichen Schutzzeiten (GT) für die Direktzugriffsprozedur,
• Verwenden eines Rundfunksignals (TS) für die Synchronisation einer Übertragung von Uplink-Signalen mit einer Übertragung von Downlink-Signalen,
• und Auswählen eines Präambelformats unter den besagten mindestens zwei Präambelformaten mit der kürzesten Schutzzeitlänge (GT) oder der kleinsten Menge von erforderlichen Funkressourcen für die Direktzugriffsprozedur.

12. Kommunikationsnetzwerk (CN) mit mindestens einer Basisstation (BS) gemäß Anspruch 10 und mindestens einem Benutzerendgerät (UE) gemäß Anspruch 11.

## Revendications

1. Procédé pour une procédure d'accès aléatoire entre une station de base (BS) et des terminaux d'utilisateurs (UE), dans lequel
• la station de base (BS) signale aux terminaux d'utilisateurs (UE) au moins deux formats de préambule ayant des temps de garde (GT) différents pour la procédure d'accès aléatoire,
• au moins un terminal d'utilisateur (UE) utilise un signal de diffusion (TS) qui est également reçu par la station de base (BS) pour synchroniser une transmission de signaux de liaison montante avec une transmission de signaux de liaison descendante,
• et au moins un parmi le ou les terminaux d'utilisateurs (UE), qui utilisent le signal de diffusion (TS) pour ladite synchronisation, sélectionne un format de préambule ayant la plus petite longueur de temps de garde (GT) ou la plus petite quantité de ressources radio nécessaires parmi lesdits au moins deux formats de préambule pour la procédure d'accès aléatoire.

2. Procédé selon la revendication 1, dans lequel ledit signal de diffusion (TS) est un signal de système de positionnement mondial.

3. Procédé selon l'une quelconque des revendications précédentes, dans lequel l'au moins un parmi le ou les terminaux d'utilisateurs (UE) détermine un retard de propagation entre le signal de diffusion (TS) et le début de la réception du signal de liaison descendante, et calcule une valeur de correction de retard pour avancer la transmission du signal de liaison montante sur la base du retard de propagation déterminé.

4. Procédé selon la revendication 3, dans lequel l'au moins un parmi le ou les terminaux d'utilisateurs (UE) prend en compte un décalage temporel entre le signal de diffusion (TS) et le début de la transmission du signal de liaison descendante pour calculer la valeur de correction de retard.

5. Procédé selon l'une quelconque des revendications précédentes, dans lequel des terminaux d'utilisateurs (UE) qui n'utilisent pas le signal de diffusion (TS) pour ladite synchronisation utilisent un desdits au moins deux formats de préambule qui a été sélectionné par la station de base (BS) pour la transmission sans synchronisation pour la procédure d'accès aléatoire.

6. Procédé selon l'une quelconque des revendications précédentes, dans lequel des terminaux d'utilisateurs (UE) signalent à la station de base (BS) des informations sur leur capacité à utiliser le signal de diffusion (TS) pour ladite synchronisation.

7. Procédé selon l'une quelconque des revendications précédentes, dans lequel la station de base (BS) signale aux terminaux d'utilisateurs (UE) les au moins deux formats de préambule ayant des temps de garde (GT) différents pour la procédure d'accès aléatoire seulement si la quantité de terminaux d'utilisateurs (UE) qui ont la capacité d'utiliser le signal de diffusion (TS) pour ladite synchronisation est supérieure à un seuil.

8. Procédé selon l'une quelconque des revendications précédentes, dans lequel l'au moins un parmi le ou les terminaux d'utilisateurs (UE) estime une puissance d'émission pour les signaux de liaison montante en fonction du retard de propagation.

9. Procédé selon l'une quelconque des revendications précédentes, dans lequel l'au moins un parmi le ou les terminaux d'utilisateurs (UE) détermine une distance jusqu'à la station de base (BS) et estime une puissance d'émission pour les signaux de liaison montante en fonction de la distance déterminée.

10. Station de base (BS) pour une procédure d'accès aléatoire entre la station de base (BS) et au moins un terminal d'utilisateur (UE), la station de base (BS) comprenant au moins un moyen de traitement qui est adapté pour signaler à l'au moins un terminal d'utilisateur (UE) au moins deux formats de préambule ayant des temps de garde (GT) différents pour la procédure d'accès aléatoire.

11. Terminal d'utilisateur (UE) pour une procédure d'accès aléatoire entre la station de base (BS) et le terminal d'utilisateur (UE), le terminal d'utilisateur (UE) comprenant au moins un moyen de traitement qui est adapté pour
• recevoir au moins deux formats de préambule ayant des temps de garde (GT) différents pour la procédure d'accès aléatoire,
• utiliser un signal de diffusion (TS) pour la synchronisation d'une transmission de signaux de liaison montante avec une transmission de signaux de liaison descendante,
• et sélectionner un format de préambule parmi lesdits au moins deux formats de préambule ayant la plus petite longueur de temps de garde (GT) ou la plus petite quantité de ressources radio nécessaires pour la procédure d'accès aléatoire.

12. Réseau de communication (CN) comprenant au moins une station de base (BS) selon la revendication 10 et au moins un terminal d'utilisateur (UE) selon la revendication 11.
